# EUROPÄISCHE PATENTANMELDUNG

(11) **EP 1 249 408 A1**
(43) Veröffentlichungstag der Anmeldung: **16.10.2002**
(21) Anmeldenummer: 02007861.4
(22) Anmeldetag: 08.04.2002
(51) Int. Cl.: B65G 47/90

(54) **Vorrichtung zum Ergreifen, Transportieren und/oder Positionieren von Stapeln aus blattartigen Materialien**

(30) Priorität: 10.04.2001 DE 10118007
(71) Anmelder: Baumann Maschinenbau Solms GmbH & Co. KG, 35606 Solms (DE)
(72) Erfinder: Assmann, Volker, 35768 Siegbach (DE); Schmitt, Berthold, 35638 Leun (DE)
(74) Vertreter: Patentanwälte Lippert, Stachow, Schmidt & Partner

(57) **Zusammenfassung**

Die Erfindung betrifft eine Vorrichtung zum Ergreifen, Transportieren und/oder Positionieren von Stapeln aus blattartigen Materialien, wie sie insbesondere an Schneideanlagen zum automatischen Befördern von Stapeln aus Papier- oder Kartonlagen zum Einsatz kommt und im wesentlichen aus einer Führungsschienenanordnung mit wenigstens einer Führungsschiene und wenigstens einem mit der Führungsschienenanordnung verbundenen beweglichen Schlitten besteht, der eine Greifereinrichtung mit einem parallel zur Arbeitsfläche drehbar gelagertem Greifer trägt.

Die erfindungsgemäße Aufgabe, die darin besteht, vorbenannte Vorrichtung so weiterzuentwickeln, dass der konstruktive Aufwand hinsichtlich der Realisierung der Bewegungen des Stapels vermindert wird und die Bewegungsabläufe zeitsparend durchgeführt werden, wird erfindungsgemäß dadurch gelöst, dass das Ausführen der Positionierbewegungen kurvengesteuert erfolgt und der Greifer (18) einen horizontal verschiebbaren Greiferarm (17) aufweist, so dass der Greifer (18) wahlweise oder gleichzeitig den ergriffenen Stapel (5) sowohl horizontal verschieben als auch in beliebige Position um die vertikale Achse verdrehen kann.

## Beschreibung

Die Erfindung betrifft eine Vorrichtung zum Ergreifen, Transportieren und/oder Positionieren von Stapeln aus blattartigen Materialien, wie sie insbesondere an Schneideanlagen zum automatischen Befördern von Stapeln aus Papier- oder Kartonlagen zum Einsatz kommt und im wesentlichen aus einer Führungsschienenanordnung mit wenigstens einer Führungsschiene und wenigstens einem mit der Führungsschienenanordnung verbundenen beweglichen Schlitten besteht, der eine Greifereinrichtung mit einem parallel zur Arbeitsebene drehbar gelagerten Greifer trägt.

Solcherart Vorrichtungen sind hauptsächlich zum Einsatz an Schneidemaschinen zum Beschneiden von Papierstapeln bereits bekannt. Sie dienen dem wenigstens teilweise automatisierten Transport von Papierstapeln beispielsweise von einem Schüttelautomaten in die Bearbeitungsposition auf dem Hintertisch einer Schneidemaschine beziehungsweise dem automatischen Positionieren von zu beschneidenden Papierstapeln in der Schneideinrichtung und dem Entfernen beschnittener Stapel aus der Schneideinrichtung.

So offenbart beispielsweise die EP 0 978 357 A2 eine Schneideanlage mit Schnittguttransportsystem, bei der das Schnittguttransportsystem eine das Schnittgut ergreifende Zange aufweist, die an einem Schlitten höhenverstellbar gelagert ist. Der Schlitten ist an einer Führungsschiene beweglich angebracht und das Schnittgut wird von der Zange über die Lufttische der Schneideanlage gezogen. Die Führungsschiene weist einen winkelförmigen Bereich auf, so dass das ungeschnittene Schnittgut auf einen vom Bediener abgewandten Hintertisch der Schneidemaschine zuführbar ist. Von dort aus wird das Schneidgut von einem Sattel automatisch der Schneideinrichtung zugeführt.

Nachteilig an dieser Lösung ist, dass das weitere Positionieren, beispielsweise bei einem Vier-Seiten-Beschnitt des Papierstapels im weiteren von der Bedienperson per Hand ausgeführt werden muss.

Eine weitere bekannte Lösung ist in DE 200 00 525 U1 offenbart. Hiernach ist eine Vorrichtung zum Transportieren und Positionieren, insbesondere von Lagen aus gestapelten, blattförmigen Gut auf einer Arbeitsfläche beschrieben, die ebenfalls einen Greifer aufweist, der um eine parallel zur Arbeitsfläche und quer zum Zangenmaul liegenden Schwenkachse schwenkbar, parallel zur Arbeitsfläche drehbar und eine der Zangenbacken höhenverstellbar ist.

Diese Greifereinrichtung ist insbesondere hinsichtlich des Ausführens der elektronisch geregelten Positionierung konstruktiv aufwendig ausgeführt. Wird auf aufwendige NC-Steuerungen oder andere elektronische Regelungen verzichtet, gestaltet sich das Ausführen der Linear- und Drehbewegungen relativ zeitintensiv, da die Bewegungen nur nacheinander und voneinander unabhängig ausgeführt werden können.

Es ist daher Aufgabe der Erfindung, eine Vorrichtung zum Ergreifen, Transportieren und Positionieren von Stapeln aus blattförmigen Materialien so weiterzuentwickeln, dass der konstruktive Aufwand hinsichtlich der Realisierung der Bewegungen des Stapels vermindert wird und die Bewegungsabläufe zeitsparend erfolgen.

Erfindungsgemäß wird die Aufgabe dadurch gelöst, dass das Ausführen der Positionierbewegungen kurvengesteuert erfolgt und der Greifer einen horizontal verschiebbaren Greiferarm aufweist, so dass der Greifer wahlweise oder gleichzeitig den ergriffenen Stapel sowohl beliebig horizontal verschieben als auch in beliebige Position um die vertikale Achse verdrehen kann.

Mit der erfindungsgemäßen Lösung werden Antriebsmittel zum Ausführen der Drehbewegung des Stapels eingespart, ebenso entfallen Mittel zur elektronischen Regelung des Bewegungsablaufes, wie beispielsweise Sensorik zur Positionsbestimmung des Stapels im Bearbeitungsbereich der Maschine.

Die Kurvensteuerung ermöglicht außerdem gleichzeitige Bewegungsabläufe bezüglich des Verschiebens entlang der und/oder quer zur Führungsschiene und eines kontinuierlichen, voreingestellten Verdrehens um die Vertikale, wobei die notwendige Bearbeitungsposition erreicht ist, wenn der Stapel beispielsweise auf den Hintertisch einer Schneidemaschine transportiert und vor dem Sattel, der den Stapel in die Schneideeinrichtung schiebt, automatisch abgelegt worden ist.

Nach einer vorzugsweisen Ausführung der erfindungsgemäßen Vorrichtung wird der Greiferarm im Drehlager längsverschieblich geführt und mit dem Schlitten und dem Greiferarm steht eine Kurvengetriebeanordnung in Wirkverbindung. Dabei besteht die Kurvengetriebeanordnung aus einer mit wenigstens einer Führungsbahn versehenen Kurvenscheibe, die feststehend am Schlitten angeordnet ist, und einer Kurvenrolle, die mit dem Greiferarm fest verbunden ist und in der Führungsbahn zwangsgeführt wird.

Mit dieser konstruktiv einfachen Lösung wird ermöglicht, dass der Stapel auch während des Verschiebens entlang der Führungsschiene und des Verdrehens um die Vertikale zusätzlich linear verschoben werden kann, beispielsweise rechtwinklig zur Führungsschiene.

Der gesamte Bewegungsablauf wird gesteuert durchgeführt, die jeweiligen Positionen des Stapels sind über die Kontur der Führungsbahn in der Kurvenscheibe vorgegeben.

Konstruktiv von Vorteil ist auch, wenn der Greifer um eine im wesentlichen parallel zur Beförderungsebene und im wesentlichen quer zum Greifer liegende Schwenkachse schwenkbar ausgebildet ist.

Mit Einsatz dieser aus DE 200 00 525 U1 bekannten Greifereinrichtung können weitere Antriebsmittel eingespart werden, die notwendig sind, wenn andere, ebenfalls bekannte Greifereinrichtungen eingesetzt werden, deren Greifereinheit höhenverstellbar ausgebildet ist.

Zur Gewährleistung des automatischen Transportes ist es von Vorteil, wenn die Führungsschienenanordnung wenigstens eine Führungsschiene aufweist, die über ihre Lauflänge einen kurvenförmigen Bereich aufweist.

Diese in EP 0 978 357 A2 beschriebene Ausführung der Führungsschienenanordnung gestattet insbesondere dann ein vollautomatisches Manipulieren des Stapels, wenn die Führungsschienenanordnung aus die Bearbeitungsmaschine umlaufenden Führungsschienen besteht. Damit wird ein automatisches Befördern und/oder Positionieren des Stapels vor und/oder während und/oder nach dessen Bearbeitung möglich.

Nach einer anderen Ausführung der erfindungsgemäßen Vorrichtung ist vorgesehen, dass im Beschickungsbereich der Bearbeitungsmaschine zusätzlich eine Greifereinrichtung, die vorzugsweise dem Verschieben des Stapels entlang der Führungsschiene dient, angeordnet ist.

Der Einsatz wenigstens einer weiteren Greifereinrichtung ist beispielsweise dann von Vorteil, wenn vorausgehende Bearbeitungsprozesse, wie beispielsweise das Ausrichten des Stapels in einem Schüttelautomaten, schneller ablaufen als nachfolgende, beispielsweise das Beschneiden des Stapels in der Schneidemaschine. Die zweite Greifereinrichtung kann während des Bearbeitungs- oder Positioniervorganges eingesetzt werden, um einen weiteren Stapel in "Warteposition" auf der Arbeitsfläche abzulegen.

Je nach Einsatz der erfindungsgemäßen Vorrichtung ist es auch möglich, weitere Greifereinrichtungen, beispielsweise im Bereich des Ausgangsfeldes zum Transport des geschnittenen Gutes von der Arbeitsfläche zum Abstapler, einzusetzen.

Erfindungsgemäß ist des weiteren vorgesehen, dass die Führungsbahn der Kurvenscheibe, in der die Kurvenrolle zwangsgeführt wird, derart ausgebildet ist, dass während des Verschiebens des Stapels längs der Führungsschiene ein Verdrehen des Stapels in beliebige Position möglich ist.

Dies wird, wie bereits erläutert, durch die Kontur der Führungsbahn - vorgegebener geradliniger und gekrümmter Bereicherreicht.

Zur Erhöhung des variablen Einsatzes der Vorrichtung ist vorgesehen, dass die Kurvenscheibe eine zweite Führungsbahn aufweist, die ein Verschieben ohne Verdrehen des Stapels gestattet und dass eine Weiche zum wahlweisen Führen der Kurvenrolle in einer der Führungsbahnen angeordnet ist.

Möglich ist auch, die Kurvenscheibe mit weiteren Führungsbahnen zu versehen, die jeweils einen unterschiedlichen Verlauf aufweisen, so dass mittels weiterer Weichen unterschiedliche Bewegungsabläufe voreingestellt werden können.

Von Vorteil kann es auch sein, wenn zur Ausführung variabler Bewegungsabläufe zur Positionierung von Stapeln Kurvenscheiben mit jeweils daran angepasst ausgebildeten Führungsbahnen zur Verfügung stehen.

Des weiteren können auch in den Führungsschienen Weichen vorgesehen sein, beispielsweise um bei Einsatz weiterer Greiferanordnungen ein gegenseitiges Behindern zu unterbinden.

Die Erfindung soll nachfolgend anhand eines Ausführungsbeispieles näher erläutert werden. Die zugehörige Zeichnung zeigt hierbei in
- Fig. 1: die Draufsicht auf eine Schneideanlage mit angeordneter erfindungsgemäßer Vorrichtung,
- Fig. 2: eine Seitenansicht gemäß Schnitt A-A nach Fig. 1,
- Fig. 3: die Vorderansicht nach Fig. 2,
- Fig. 4: die Draufsicht auf die Greifereinrichtung gemäß Schnitt B-B nach Fig. 3, bei der der Greifer in Übernahmeposition dargestellt ist,
- Fig. 5: die Greifereinrichtung nach Fig. 4, in um 90° gedrehter Lage,
- Fig. 6: die Greifereinrichtung nach Fig. 4 mit zwei Führungsbahnen und einer Weiche in Übernahmeposition und
- Fig. 7: die Greifereinrichtung nach Fig. 6 in Lineartransportposition.

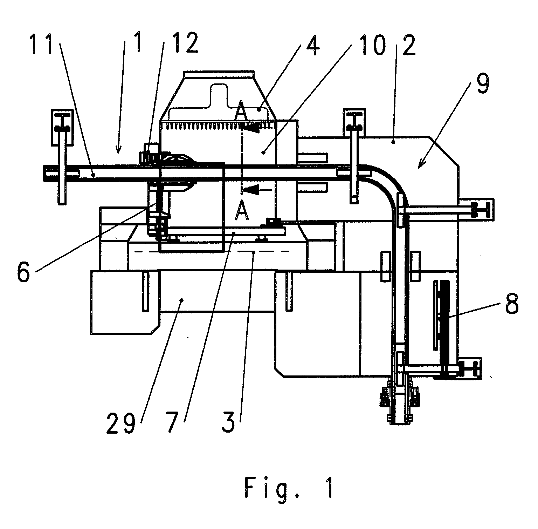

Nach Fig. 1 besteht die Schneideanlage im wesentlichen aus dem Maschinengestell 1, an dem Lufttische 2 angeordnet sind, der Schneideinrichtung 3, dem Sattel 4 zum Schieben des Stapels 5 in die Schneideinrichtung 3 und Positionierelementen, wie einen Seitenanschlag 5, Querausrichter 7 und Schiebeeinheit 8, die für den automatischen Arbeitsablauf beim Transportieren und genauen Positionieren der Papierstapel 5 notwendig sind.

Über dem Maschinengestell 1 und den Lufttischen 2 ist nach diesem Ausführungsbeispiel eine Führungsschienenanordnung 9 angeordnet, die von einem, in der Zeichnung nicht dargestellten, seitlich der Schneidemaschine angeordneten Schüttelautomaten bis über den Hintertisch 10 ragt. Die Führungsschiene 11 weist einen um ca. 90° abgebogenen Bereich auf, der den automatischen Transport des Stapels 5 bis unmittelbar vor den Sattel 4 gewährleistet.

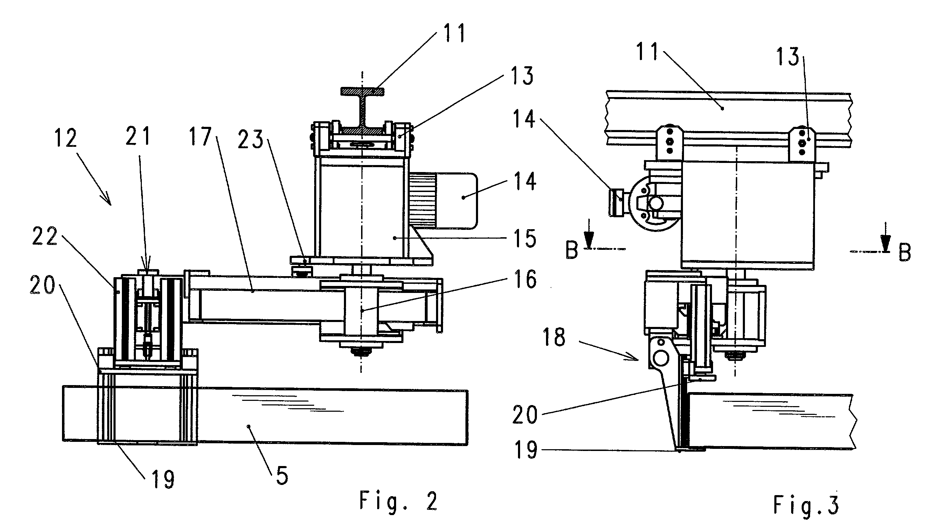

Anhand der Figuren 2 und 3 ist die konstruktive Ausführung der Greifereinrichtung 12 in ihrem wesentlichsten Aufbau erkennbar. Die Greifereinrichtung 12 ist mittels eines Fahrwerkes 13 horizontal beweglich mit der Führungsschiene 11 verbunden, dessen Verschiebebewegung entlang der Führungsschiene 11 gesteuert von einem Motor 14 angetrieben wird.

Das Fahrwerk 13 ist greifereinrichtungsseitig mit einem Schlitten 15 verbunden, an dem mittels eines Drehlagers 16 die eigentliche Greifereinheit angeordnet ist, die aus dem Greiferarm 17, dem Greifer 18 mit Unterbacke 19 und vertikal beweglicher Oberbacke 20, dem Schwenkmechanismus 21 und dem Klemmzylinder 22 für die Betätigung der höhenverstellbaren Oberbacke 20, besteht. Mit Hilfe des Schwenkmechanismus 21 wird der Greifer 18 aus seiner senkrechten Lage in eine leicht schräge Lage nach hinten verschwenkt, um den Papierstapel 5 im geöffneten Zustand des Greifers 18 zu ergreifen beziehungsweise abzulegen.

Im Drehlager 16 ist eine Führung ausgebildet, in der der Greiferarm 17 längsverschieblich gelagert ist. Das Drehlager 16 ist in gleicher Ebene, das heißt parallel zur Arbeitsfläche, drehbar. Gesteuert werden die Bewegungen mittels einer Kurvengetriebeanordnung, bestehend aus der Kurvenscheibe 23 mit den Führungsbahnen 24, 25 und einer Kurvenrolle 26. Die Führungsbahnen 24, 25 sind dabei so ausgebildet, dass die Kurvenrolle 26 in ihnen zwangsgeführt wird. Die Kurvenscheibe 23 ist mit dem Schlitten 15 fest verbunden, während die Kurvenrolle 26 so auf dem Greiferarm 17 befestigt ist, dass eine Wirkverbindung mit den Führungsbahnen 24 oder 25 der Kurvenscheibe 23 hergestellt werden kann. Die Kurvenrolle wird von dem Linearzylinder 27 angetrieben.

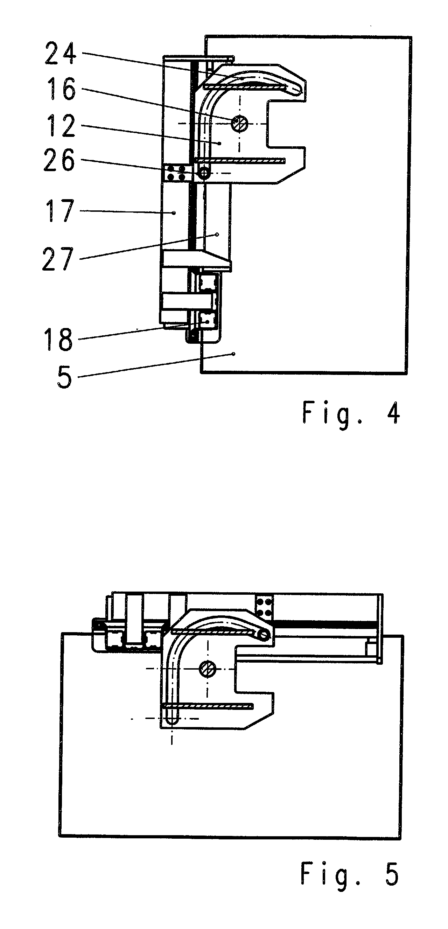

Aus den Figuren 4 und 5 ist eine der möglichen Ausführungsformen der Kurvengetriebeanordnung ersichtlich. Hiernach weist die Kurvenscheibe 23 lediglich eine Führungsbahn 24 auf, die entsprechend der auszuführenden Bewegungen mit einer Krümmung versehen ist.

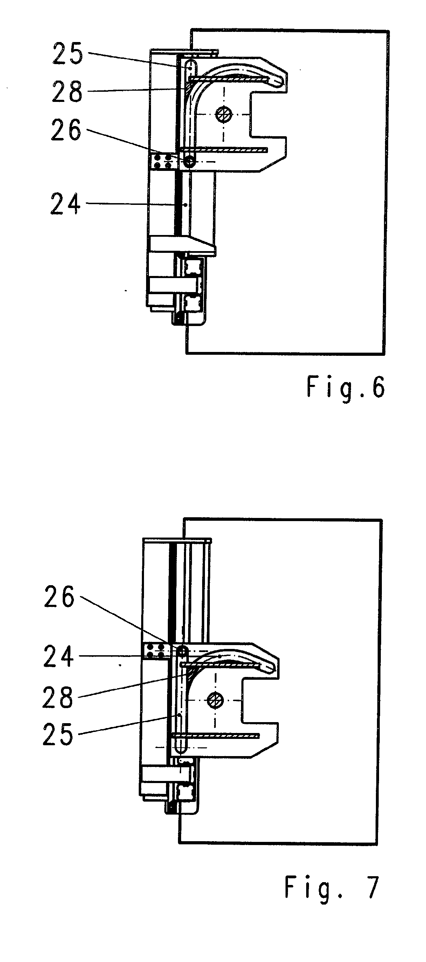

Die Figuren 6 und 7 zeigen eine weitere Ausführungsform der Kurvenscheibe 23, bei der neben der gekrümmten Führungsbahn 24 eine geradlinig verlaufende Führungsbahn 25 angeordnet ist, wobei zwischen beiden eine Kurvenweiche 28 befestigt ist, mit der das wahlweise Führen der Kurvenrolle 26 in einer der Führungsbahnen 24 oder 25 ermöglicht wird, um entweder den Stapel 5 zu drehen oder zu verschieben oder nur geradlinig zu verschieben.

In der Zeichnung nicht dargestellt sind weitere Ausführungsformen, bei denen beispielsweise die Führungsschienenanordnung 9 vollständig die Schneidemaschine umrundet, so dass auch im Bereich des Vordertisches 29 der Schneidemaschine automatische Transport- und/oder Positioniervorgänge ausgeführt werden können. Ebenfalls nicht dargestellt ist, dass weitere Greifereinrichtungen 12, die beispielsweise wie bekannt lediglich dem Transport von Papierstapeln 5 entlang einer Führungsschiene 11 dienen, eingesetzt werden können.

### Die Funktionsweise der Vorrichtung ist folgende:

Die Greifereinrichtung 12 wird in Ausgangsposition vor dem Schüttelautomat positioniert, der Greifer 18 wird geöffnet, dass heißt, die Oberbacke 20 wird mittels des Klemmzylinders 22 vertikal verschoben. Der Schwenkmechanismus 21 führt die Schwenkbewegung in schräge Lage des Greifers 18 aus und fährt mit der Unterbacke 19 unter den Stapel 5, während die Oberbakke 20 über dem Stapel 5 positioniert wird. Der Greifer 18 schwenkt in seine senkrechte Lage zurück und wird durch Absenken der Oberbacke 20 auf den Stapel 5 geschlossen. Der Stapel 5 ist transportbereit. Mittels des Fahrwerkes 13, angetrieben durch den Motor 14, erfolgt der Transport der Greifereinrichtung 12 und damit des Stapels 5 entlang der Führungsschiene 11.

Während des Transportes wird mittels des Linearzylinders 27, der die Kurvengetriebeanordnung antreibt, die voreingestellte Dreh- und/oder Verschiebebewegung quer zur Führungsschiene 11 schrittweise ausgeführt, so dass mit dem Erreichen der Ablegeposition des Stapels 5 auch die notwendige Bearbeitungsposition erreicht ist.

Zum Ablegen des Stapels 5 wird der Greifer 18 geöffnet und verschwenkt, anschließend verfährt die Greifereinrichtung 12 in eine Position außerhalb des Stapels 5 beziehungsweise außerhalb des Bearbeitungsbereiches.

Nach dem Bearbeitungsvorgang können die beschriebenen Bewegungsvorgänge beliebig oft wiederholt werden, so dass ein vollautomatisches Manipulieren des Stapels zu, in und von einer Bearbeitungsmaschine auf kostengünstige Art und Weise und mit weitaus weniger konstruktivem Aufwand als bisher bekannt durchgeführt werden kann. Die Aufgaben der Bedienperson beschränken sich im wesentlichen auf Überwachungs- und/oder Auslösefunktionen einzelner Bearbeitungsvorgänge, so dass die erfindungsgemäße Vorrichtung auch Sicht der Arbeitserleichterung ebenfalls vorteilhaft ist.

### Bezugszeichenliste

- 1: Maschinengestell
- 2: Lufttisch
- 3: Schneideinrichtung
- 4: Sattel
- 5: Stapel
- 6: Seitenanschlag
- 7: Querausrichtung
- 8: Schiebeeinheit
- 9: Führungsschienenanordnung
- 10: Hintertisch
- 11: Führungsschiene
- 12: Greifereinrichtung
- 13: Fahrwerk
- 14: Motor
- 15: Schlitten
- 16: Drehlager
- 17: Greiferarm
- 18: Greifer
- 19: Unterbacke
- 20: Oberbacke
- 21: Schwenkmechanismus
- 22: Klemmzylinder
- 23: Kurvenscheibe
- 24: Führungsbahn
- 25: Führungsbahn
- 26: Kurvenrolle
- 27: Linearzylinder
- 28: Kurvenweiche
- 29: Vordertisch

## Patentansprüche

1. Vorrichtung zum Ergreifen, Transportieren und/oder Positionieren von Stapeln aus blattartigen Materialien, wie sie insbesondere an Schneideanlagen zum automatischen Befördern von Stapeln aus Papier- oder Kartonlagen zum Einsatz kommt und im wesentlichen aus einer Führungsschienenanordnung mit wenigstens einer Führungsschiene und wenigstens einem mit der Führungsschienenanordnung verbundenen beweglichen Schlitten besteht, der eine Greifereinrichtung mit einem parallel zur Arbeitsfläche drehbar gelagertem Greifer trägt, **dadurch gekennzeichnet, dass** das Ausführen der Positionierbewegungen kurvengesteuert erfolgt und der Greifer (18) einen horizontal verschiebbaren Greiferarm (17) aufweist, so dass der Greifer (18) wahlweise oder gleichzeitig den ergriffenen Stapel (5) sowohl horizontal verschieben als auch in beliebige Position um die vertikale Achse verdrehen kann.

2. Vorrichtung nach Anspruch 1, **dadurch gekennzeichnet, dass** der Greiferarm (17) im Drehlager (16) längsverschieblich geführt wird und dass mit dem Schlitten (15) und dem Greiferarm (17) eine Kurvengetriebeanordnung in Wirkverbindung steht.

3. Vorrichtung nach Anspruch 1 und 2, **dadurch gekennzeichnet, dass** die Kurvengetriebeanordnung aus einer mit wenigstens einer Führungsbahn (24, 25) versehenen Kurvenscheibe (23), die feststehend am Schlitten (15) angeordnet ist, und einer Kurvenrolle (26), die mit dem Greiferarm (17) fest verbunden ist und in der Führungsbahn (24, 25) zwangsgeführt wird, besteht.

4. Vorrichtung nach Anspruch 1 bis 3, **dadurch gekennzeichnet, dass** der Greifer (18) um eine im wesentlichen parallel zur Arbeitsfläche und im wesentlichen quer zum Greifer (18) liegende Schwenkachse schwenkbar ausgebildet ist.

5. Vorrichtung nach Anspruch 1 bis 4, **dadurch gekennzeichnet, dass** die Führungsschienenanordnung (9) wenigstens eine Führungsschiene (11) aufweist, die über ihre Lauflänge einen kurvenförmigen Bereich aufweist.

6. Vorrichtung nach Anspruch 5, **dadurch gekennzeichnet, dass** die Führungsschienenanordnung (9) aus die Bearbeitungsmaschine umlaufenden Führungsschienen (11) besteht.

7. Vorrichtung nach Anspruch 1 bis 6, **dadurch gekennzeichnet, dass** im Beschickungsbereich der Bearbeitungsmaschine zusätzlich eine Greifereinrichtung mit höhenverstellbarem Greifer angeordnet ist.

8. Vorrichtung nach Anspruch 1 bis 7, **dadurch gekennzeichnet, dass** die Führungsbahn (24) der Kurvenscheibe (23), derart ausgebildet ist, dass während des Verschiebens des Stapels (5) längs der Führungsschiene (11) ein Verdrehen und/oder ein Verschieben quer zur Führungsschiene (11) des Stapels (5) in beliebige Position möglich ist.

9. Vorrichtung nach Anspruch 1 bis 8, **dadurch gekennzeichnet, dass** die Kurvenscheibe (23) eine zweite Führungsbahn (25) aufweist, die einen Lineartransport ohne Verdrehen des Stapels (5) gestattet und dass eine Weiche (28) zum wahlweisen Führen der Kurvenrolle (26) in einer der Führungsbahnen (23 oder 24) angeordnet ist.

10. Vorrichtung nach Anspruch 1 bis 9, **dadurch gekennzeichnet, dass** zur Ausführung variabler Bewegungsabläufe zur Positionierung von Stapeln (5) Kurvenscheiben (23) mit jeweils daran angepasst ausgebildeten Führungsbahnen (24, 25) zur Verfügung stehen.
